# EUROPÄISCHE PATENTSCHRIFT

(11) **EP 1 119 472 B1**
(45) Veröffentlichungstag und Bekanntmachung des Hinweises auf die Patenterteilung: **08.01.2003**
(21) Anmeldenummer: 99947219.4
(22) Anmeldetag: 15.07.1999
(51) Int. Cl.: B60R 21/32, B60R 21/26, B60R 21/00

(54) **ZÜNDVORRICHTUNG FÜR RÜCKHALTEMITTEL IN EINEM FAHRZEUG MIT ANGEORDNETEN SCHALTUNGSELEMENTEN IN DEM TRÄGERMITTEL**
DEPLOYMENT DEVICE FOR RESTRAINT MEANS IN A VEHICLE, WITH SWITCHING ELEMENTS LOCATED IN THE SUPPORT MEANS
DISPOSITIF D'AMORCAGE POUR ELEMENTS DE RETENUE PLACES DANS UN VEHICULE AVEC DES ELEMENTS DE COMMUTATION SITUES DANS L'ELEMENT SUPPORT

(30) Priorität: 07.10.1998 DE 19846110
(43) Veröffentlichungstag der Anmeldung: 01.08.2001
(73) Patentinhaber: ROBERT BOSCH GMBH, 70442 Stuttgart (DE)
(72) Erfinder: JAKOB, Gert, D-70378 Stuttgart (DE); NITSCHKE, Werner, D-71254 Ditzingen (DE); WIESA, Thomas, D-71665 Vaihingen (DE); GOEBEL, Ulrich, D-72760 Reutlingen (DE); HOEBEL, Albert-Andreas, D-72760 Reutlingen (DE); RUPPRECHT, Stefan, Tomioka-shi 37023 (JP); ZYWIETZ, Martin, D-71642 Ludwigsburg (DE); SCHÄDLER, Peter, D-71636 Ludwigsburg (DE)
(86) Internationale Anmeldenummer: DE9902200
(87) Internationale Veröffentlichungsnummer: WO00020262

(56) Entgegenhaltungen:
- DE-A- 3 537 820
- DE-C- 19 610 799
- US-A- 5 327 834

## Beschreibung

### Stand der Technik

Die vorliegende Erfindung betrifft eine Zündvorrichtung für Rückhaltemittel in einem Fahrzeug, die mindestens ein Zündelement und auf Trägermitteln angeordnete Schaltelemente - vorzugsweise zur Energieversorgung, zur Ansteuerung und/oder Diagnose des Zündelements - enthält, wobei an das Zündelement angeschlossene Kontaktstifte die elektrische Verbindung zu den Schaltelementen herstellen.

Eine derartige Zündvorrichtung ist aus der DE 196 10 799 C1 bekannt. Diese bekannte Zündvorrichtung ist so konzipiert, daß sie gegenüber bisher eingesetzten Zündvorrichtungen möglichst geringe Außenabmessungen aufweist, um beispielsweise auch im Lenkrad eines Fahrzeugs untergebracht werden zu können. Bisher waren nämlich das Zündelement und eine Zündendstufe, welche Schaltungen zur Energieversorgung, zur Ansteuerung und/oder Diagnose des Zündelements enthielt, in getrennten miteinander über Steckverbinder kontaktierbaren Modulen untergebracht. Gemäß der DE 196 10 799 C1 sind in einem Modul-Gehäuse neben einem die thermische Energie für die Zündung eines Zündgemisches erzeugenden Zündelements auch Schaltungselemente z. B. für die Energieversorgung, die Ansteuerung und/oder Diagnose des Zündelements untergebracht. Dazu befindet sich in dem Modul-Gehäuse unterhalb des Zündelements ein quaderförmiger Körper, in dem Kontaktstifte für das Zündelement integriert sind und auf dessen Seitenwänden Schaltungselemente aufgebracht sind. Der quaderförmige Körper dient also sowohl zur Fixierung von Kontaktstiften für das Zündelement als auch als Träger für die Schaltelemente.

### Vorteile der Erfindung

Eine fertigungstechnisch einfach herstellbare und montagetechnisch einfach handhabbare Zündvorrichtung geht aus dem Anspruch 1 hervor. Danach sind mindestens ein Zündelement und seine Kontaktstifte in einer Kapsel fixiert. Trägermittel für Schaltelemente sind in einem in die Kapsel einsetzbaren Sockel angeordnet. Außerdem sind Federelemente vorhanden, die bei Einsatz des Sockels in die Kapsel Kontakt zwischen den Schaltelementen und den Kontaktstiften des Zündelements herstellen. Gemäß der Erfindung besteht die Zündvorrichtung aus zwei Bauteilen. Das eine ist die Kapsel mit mindestens einem Zündelement und zugehörigen Kontaktstiften und das andere ist der Sockel, in dem sich die Schaltelemente befinden. Vorteil dieser Zweiteilung der Zündvorrichtung besteht darin, daß jeder Teil, nämlich einerseits die Kapsel mit dem Zündelement und andererseits der Sockel mit den Schaltelementen, getrennt voneinander hergestellt und geprüft werden können. Der Sockel mit den Schaltelementen kann dann unterschiedlichen Kunden zur Endmontage mit der Zündelement-Kapsel geliefert werden.

Vorteilhafte Weiterbildungen der Erfindung gehen aus den Unteransprüchen hervor. Die Trägermittel für die Schaltelemente können aus mindestens einem quer zu den Kontaktstiften des Zündelements verlaufenden Substrat bestehen, dessen Ober- und/oder Unterseite mit Schaltelementen bestückt ist.

In dem Sockel sind zweckmäßigerweise Anschlußstifte fixiert, die einerseits mit Schaltelementen kontaktiert sind und andererseits aus der Zündvorrichtung herausgeführt sind, damit sie mit einem Anschlußstecker in Verbindung gebracht werden können.

Auf der den Kontaktstiften des Zündelements zugewandten Seite eines Substrats können Kontaktflächen vorgesehen werden, auf denen die Federelemente aufliegen.

Im Sockel kann mindestens eine Aussparung zur Aufnahme mindestens eines Schaltelements vorgesehen sein. Mindestens ein in den Sockel eingelassener Anschlußstift dient dazu, eine elektrische Verbindung zwischen diesem Schaltelement und einem oder mehreren anderen Schaltelementen herzustellen. Vorzugsweise ist der Anschlußstift auf den Sockeln nach außen herausgeführt, und der aus den Sockel herausgeführte Teil des Anschlußstiftes mit einem isolierenden Kunststoff umspritzt. Der mit Kunststoff umspritzte Anschlußstift kann als Verdrehsicherung beim Einstecken der Zündvorrichtung in einen Anschlußstecker dienen.

### Zeichnung

Anhand zweier in der Zeichnung dargestellter Ausführungsbeispiele wird nachfolgend die Erfindung näher erläutert. Es zeigen:
Figur 1 einen Längsschnitt durch eine Zündvorrichtung mit übereinander angeordneten Substraten für Schaltelemente,
Figur 2 ein Federelement und
Figur 3 einen Längsschnitt durch eine Zündvorrichtung mit in Aussparungen des Stecker-Sockels liegenden Schaltelementen.

### Beschreibung von Ausführungsbeispielen

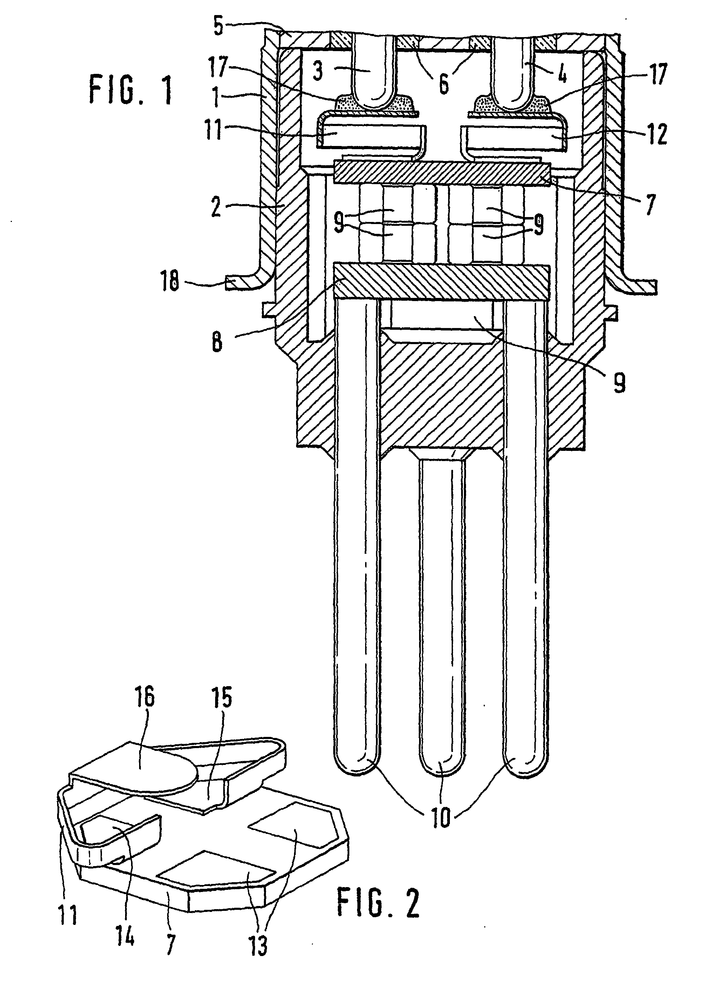

Wie aus dem in Figur 1 dargestellten Längsschnitt durch eine Zündvorrichtung zu entnehmen ist, besteht diese aus einer Zünd-Kapsel 1 und einem darin einsteckbaren Sockel 2. Die Zünd-Kapsel 1 enthält in bekannter Weise ein oder mehrere Zündelemente, die z.B. als Widerstandsdrähte ausgeführt sind und mit einem zündfähigen Material in Verbindung stehen. Das Innere der Zünd-Kapsel ist in der Figur 1 nicht dargestellt, weil die Funktion einer solchen Zündkapsel an sich bekannt ist und auch nicht Gegenstand der Erfindung ist. Die elektrische Verbindung zu dem mindestens einen Zündelement wird über Kontaktstifte 3 und 4 hergestellt, welche durch den Boden 5 der Zünd-Kapsel 1 hindurchgeführt sind. Die Kontaktstifte 3 und 4 sind in Öffnungen des Bodens 5 z.B. mit einer Glasschmelze 6 fixiert. Der über den Boden 5 hinausragende Überstand der Kapsel 1 dient zur Aufnahme des bereits angesprochenen Sockels 2.

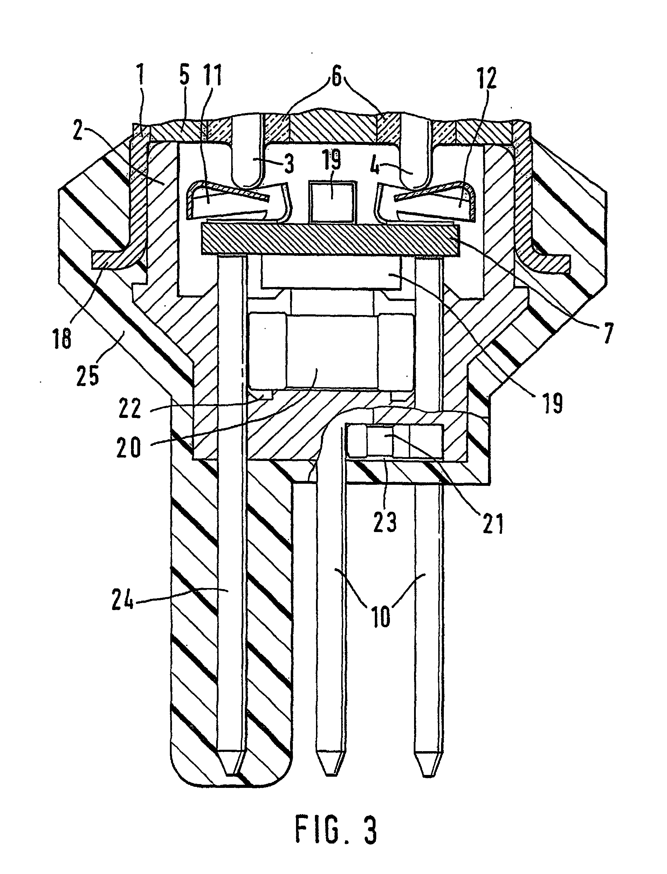

In dem Sockel 2 sind zwei senkrecht zu den Kontaktstiften 3 und 4 verlaufende Substrate 7 und 8 übereinander angeordnet. Diese Substrate 7, 8 dienen als Träger für verschiedene Schaltelemente 9, die auf einer oder auf beiden Seiten der beiden Substrate 7, 8 aufgebracht sein können. Die Schaltungselemente 9 sind z.B. SMD-Bauteile oder ASICs in Flip-Chip-Technik. Die Schaltelemente dienen vorzugsweise zur Energieversorgung oder zur Ansteuerung und/oder Diagnose des in der Zünd-Kapsel 1 untergebrachten Zündelements. Die Schaltelemente 9 können abweichend von dem in der Figur 1 dargestellten Ausführungsbeispiel auch in einer anderen Konstellation angeordnet sein. Ein weiteres Beispiel dafür zeigt die später noch beschriebene Figur 3.

Der Sockel 2 dient außerdem als Halterung für mehrere Anschlußstifte 10, die einerseits im Inneren des Sockels 2 mit den Schaltelementen 9 kontaktiert sind und andererseits aus dem Sockel 2 herausgeführt sind, damit sie mit einem (nicht dargestellten) Anschlußstecker in Verbindung gebracht werden können. In dem in Figur 1 dargestellten Ausführungsbeispiel sind die Anschlußstifte 10 mit dem unteren Substrat 8 z.B. durch Kontaktkleben oder Löten kontaktiert. Die elektrische Verbindung zu den Schaltelementen auf den einzelnen Substraten 8 und 7 erfolgt über Leiterbahnen auf den Substraten 7, 8, und die elektrische Verbindung zwischen den beiden Substraten 7 und 8 geschieht in dargestellter Weise durch den direkten Kontakt mit den auf der Oberseite des Substrats 8 und den auf der Unterseite des Substrats 7 angeordneten SMD-Bauelementen 9. Die Verbindung zwischen den beiden Substraten 8 und 9 kann ebenso durch die Anschlußstifte 10, welche zum Substrat 7 durch das Substrat 8 durchgeführt sind, oder durch eigene die beiden Substrate 7 und 8 miteinander elektrisch verbindende Kontaktstifte hergestellt werden.

Die elektrische Verbindung zwischen den Kontaktstiften 3 und 4 des Zündelements und den Schaltelementen 9 erfolgt über Federelemente 11 und 12. Und zwar ist für jeden Kontaktstift 3 und 4 ein eigenes Federelement 11 bzw. 12 vorgesehen. Eine mögliche Ausgestaltung der Federelemente verdeutlicht die perspektivische Darstellung des Federelements 11 in der Figur 2. Das Substrat 7 ist auf seiner Oberseite mit jeweils zwei Kontaktflächen 13 für jedes Federelement 11 bzw. 12 versehen. Jedes Federelement 11, 12 weist zwei Auflageflächen 14 und 15 auf, welche an die Kontaktflächen 13 auf dem Substrat 7 angepaßt sind. Den Auflageflächen 14 und 15 gegenüberstehend befindet sich am Federelement 11 eine elastische Kontaktzunge 16. Auf die Kontaktzunge 16 des Federelements 11 bzw. 12 trifft beim Einschieben des Sockels 2 in die Kapsel 1 der Kontaktstift 3 bzw. 4 des Zündelements auf. Durch die Federelemente 11 und 12 wird die Abstandstoleranz zwischen den Kontaktstiften 3 und 4 und den Kontaktflächen 13 auf dem Substrat 7 ausgeglichen und eine sichere elektrische Verbindung zwischen den Kontaktstiften 3, 4 und den Schaltelementen 9 auf den Substraten 7 und 8 hergestellt. Die Federelemente 11 und 12 können, wie in Figur 1 dargestellt, mit den Kontaktstiften 3 und 4 durch Kleben oder Löten 17 verbunden werden. Zwecksmäßig ist auch eine Kleb- oder Lötverbindung der Auflageflächen 14, 15 der Federelemente 11, 12 mit den Kontaktflächen 13 auf dem Substrat 7.

Nachdem der Sockel 2 in die Kapsel 1 eingesetzt worden ist, erfolgt zur gegenseitigen Fixierung der beiden Bauteile der Zündvorrichtung eine Kunststoffumspritzung im Bereich des unteren Randes 18 der Kapsel 1. Auf diese Kunststoffumspritzung wird im Zusammenhang mit der Figur 3 noch näher eingegangen.

Die Figur 3 zeigt ein weiteres Ausführungsbeispiel einer Zündvorrichtung. Teile dieser Zündvorrichtung, die denen des Ausführungsbeispiels in Figur 1 gleichen, sind auch mit gleichen Bezugszeichen versehen und werden hier nicht nochmals näher beschrieben. Die Figur 3 zeigt eine andere Variante für die Unterbringung von Schaltelementen in dem Sockel 2. Es gibt wie auch schon beim Ausführungsbeispiel der Figur 1 ein Substrat 7, dessen Ober- und Unterseite mit Schaltungselementen 19 bestückt sind. Das Substrat 7 dient zudem als Auflage für die Federelemente 11 und 12, welche den elektrischen Kontakt zwischen den Schaltelementen 19 auf dem Substrat 7 und den Kontaktstiften 3, 4 des Zündelements herstellen.

Weitere Schaltelemente 20, 21, z.B. in Gestalt von SMD-Bauteilen sind in Aussparungen 22 und 23 innerhalb des Sockels 2 angeordnet. Zwischen den Schaltelementen 20 und 21 und den anderen Schaltelementen 19 auf dem Substrat 7 und darüberhinaus mit den Kontaktstiften 3 und 4 des Zündelements wird über mindestens einen in dem Sockel 2 eingelassenen Anschlußstift 24 eine elektrische Verbindung hergestellt. Der Anschlußstift 24 führt dabei an einem Kontakt z.B. des Schaltelements 20 vorbei und endet an dem Substrat 7, wo er mit einer Leiterbahn z.B. durch Kleben oder Löten kontaktiert sein kann.

Der Anschlußstift 24 ist gemäß dem Ausführungsbeispiel in Figur 3 ein wie die anderen (in Zusammenhang mit Figur 1 bereits beschriebenen) Anschlußstifte 10 aus dem Sockel 2 herausragender Stift. Wenn dieser Anschlußstift 24 nur die Funktion einer elektrischen Verbindung zwischen den Schaltelementen 20, 21 und 19 innerhalb des Sockels 2 hat, braucht er sich auch nur innerhalb des Sockels 2 zu erstrecken, ohne daß er aus dem Sockel 2 herausragt. Wenn nun, wie in Figur 3 dargestellt, der Anschlußstift 24 genauso ausgestaltet ist wie die anderen Anschlußstifte 10, aber anders als die Anschlußstifte 10 keine elektrische Verbindung mit einem Anschlußstecker eingehen soll, kann dieser Anschlußstift 24 als Verdrehsicherung beim Einstecken der zündvorrichtung in einem Anschlußstecker dienen. Dazu ist es zweckmäßig, den Anschlußstift 24 mit einem isolierenden Kunststoff zu umspritzen. Die Kunststoffumspritzung des Anschlußstiftes 24 wird gleichzeitig mit der Kunststoffumspritzung 25 des Randes 18 der Zünd-Kapsel 1 mit dem aus der Kapsel 1 herausstehenden Sockel 2 durchgeführt.

## Patentansprüche

1. Zündvorrichtung für Rückhaltemittel in einem Fahrzeug, die mindestens ein Zündelement (1) und auf Trägermittel (7,8) angeordnete Schaltelemente (9) vorzugweise zur Energieversorgung, zur Ansteuerung und/oder Diagnose des Zündelements - enthält, wobei an das Zündelement (1) angeschlossene Kontaktstifte (3,4) die elektrische Verbindung zu den Schaltelementen (9) herstellen, **dadurch gekennzeichnet, daß** das Zündelement und seine Kontaktstifte (3, 4) in einer Zünd-Kapsel (1) fixiert sind, daß die Trägermittel (7, 8) mit den Schaltelementen (9, 19, 29, 21) in einem in die Zünd-Kapsel (1) einsetzbaren Sockel (2) angeordnet sind und daß Federelemente (11, 12) vorhanden sind, über die bei Einsatz des Sockels (2) in die Zünd-Kapsel (1) Kontakt zwischen den Schaltelementen (9, 19, 29, 21) und den Kontaktstiften (3, 4) des Zündelements hergestellt wird.

2. Zündvorrichtung nach Anspruch 1, **dadurch gekennzeichnet, daß** die Trägermittel aus mindestens einem quer zu den Kontaktstiften (3, 4) des Zündelements verlaufenden Substrat (7, 8) bestehen, dessen Ober- und/oder Unterseite mit Schaltelementen (9, 19) bestückt ist.

3. Zündvorrichtung nach Anspruch 1 oder 2, **dadurch gekennzeichnet, daß** in dem Sockel (2) Anschlußstifte (10) fixiert sind, die einerseits mit Schaltelementen (9, 19, 20, 21) kontaktiert sind und andererseits aus der Zündvorrichtung herausgeführt sind, damit sie mit einem Anschlußstecker in Verbindung gebracht werden können.

4. Zündvorrichtung nach den Ansprüchen 1 und 2, **dadurch gekennzeichnet, daß** auf der den Kontaktstiften (3, 4) des Zündelements zugewandten Seite eines Substrats (7) Kontaktflächen (13) vorhanden sind, auf denen die Federelemente (11, 12) aufliegen.

5. Zündvorrichtung nach Anspruch 1, **dadurch gekennzeichnet, daß** im Sockel (2) mindestens eine Aussparung (22, 23) zur Aufnahme mindestens eines Schaltelements (20, 21) vorgesehen ist und daß mindestens ein in dem Sockel (2) eingelassener Anschlußstift 24 eine elektrische Verbindung zwischen diesem Schaltelement (20) und einem oder mehreren anderen Schaltelementen (19) herstellt.

6. Zündvorrichtung nach Anspruch 5, **dadurch gekennzeichnet, daß** der Anschlußstift (24) aus dem Sockel (2) nach außen herausgeführt ist, daß der aus dem Sockel (2) herausgeführte Teil des Anschlußstiftes (24) mit einem isolierendem Kunststoff (25) umspritzt ist und daß der mit Kunststoff (25) umspritzte Anschlußstift (24) als Verdrehsicherung beim Einstecken der Zündvorrichtung in einem Anschlußstecker dient.

## Claims

1. Ignition device for restraint means in a vehicle, which contains at least one ignition element (1) and switch elements (9) arranged on support means (7, 8) - preferably for the power supply, for the activation and/or diagnosis of the ignition element, contact pins (3, 4) connected to the ignition element (1) producing the electric connection to the switch elements (9), **characterized in that** the ignition element and its contact pins (3, 4) are secured in an ignition capsule (1), **in that** the support means (7, 8) are arranged with the switch elements (9, 19, 29, 21) in a base (2) which can be inserted into the ignition capsule (1), and **in that** there are spring elements (11, 12) via which, when the base (2) is inserted into the ignition capsule (1), contact is produced between the switch elements (9, 19, 29, 21) and the contact pins (3, 4) of the ignition element.

2. Ignition device according to Claim 1, **characterized in that** the support means comprise at least one substrate (7, 8) which runs transversely to the contact pins (3, 4) of the ignition element and the upper and/or lower side of which is provided with switch elements (9, 19).

3. Ignition device according to Claim 1 or 2, **characterized in that** connection pins (10) are secured in the base (2), the said connection pins making contact at one end with switch elements (9, 19, 20, 21) and at the other end being led out of the ignition device so that they can be brought into connection with a connector plug.

4. Ignition device according to Claims 1 and 2, **characterized in that** there are contact surfaces (13) on that side of a substrate (7) which faces the contact pins (3, 4) of the ignition element, on which surfaces the spring elements (11, 12) rest.

5. Ignition device according to Claim 1, **characterized in that** at least one cutout (22, 23) for receiving at least one switch element (20, 21) is provided in the base (2), and **in that** at least one connection pin (24) embedded in the base (2) produces an electric connection between this switch element (20) and one or more other switch elements (19).

6. Ignition device according to Claim 5, **characterized in that** the connection pin (24) is led out of the base (2) to the outside, **in that** that part of the connection pin (24) which is led out of the base (2) is encapsulated with an insulating plastic (25), and **in that** the connection pin (24) which is encapsulated with plastic (25) is used as an anti-twist means when the ignition device is inserted in a connector plug.

## Revendications

1. Dispositif d'allumage pour un moyen de retenue équipant un véhicule automobile, comprenant au moins un élément d'allumage (1) et des éléments de commutation (9) montés sur des moyens de support (7, 8) (de préférence pour l'alimentation en énergie, la commande et/ou le diagnostic de l'élément d'allumage), avec des broches de contact (3, 4) reliées à l'élément d'allumage (1) qui réalisent la liaison électrique avec les éléments de commutation (9),
**caractérisé en ce que**
l'élément d'allumage et ses broches de contact (3, 4) sont fixés dans une capsule d'allumage (1),
le moyen de support (7, 8) avec les éléments de commutation (9, 19, 29, 21) sont montés dans un socle (2) qui se place dans la capsule d'allumage (1), et
des éléments de ressort (11, 12) sont prévus par lesquels, lors de la mise en place du socle (2) dans la capsule d'allumage (1), on réalise le contact entre les éléments de commutation (9, 19, 29, 21) et les broches de contact (3, 4) de l'élément d'allumage.

2. Dispositif d'allumage selon la revendication 1,
**caractérisé en ce que**
les moyens de support se composent d'au moins un substrat (7, 8) transversal aux broches de contact (3, 4) de l'élément d'allumage et dont la face supérieure et/ou inférieure est garnie d'éléments de commutation (9, 19).

3. Dispositif d'allumage selon l'une quelconque des revendications 1 ou 2,
**caractérisé en ce que**
des broches de branchement (10) sont fixées dans le socle (2), ces broches étant d'un côté en contact avec des éléments de commutation (9, 19, 20, 21) et de l'autre elles sortent du dispositif d'allumage pour être mises en liaison avec un connecteur.

4. Dispositif d'allumage selon l'une quelconque des revendications 1 et 2,
**caractérisé en ce que**
sur le côté d'un substrat (7), à l'opposé de celui des broches de contact (3, 4) de l'élément d'allumage, on a des surfaces de contact (13) sur lesquelles s'appuient des éléments de ressort (11, 12).

5. Dispositif d'allumage selon la revendication 1,
**caractérisé en ce que**
le socle (2) comporte au moins une cavité (22, 23) pour recevoir au moins un élément de commutation (20, 21) et
au moins une broche (24) insérée dans le socle (2) réalise une liaison électrique entre cet élément de commutation (20) et un ou plusieurs autres éléments de commutation (19).

6. Dispositif d'allumage selon la revendication 5,
**caractérisé en ce que**
la broche (24) vient en saillie du socle (2) et la partie de la broche de contact (24) sortant du socle (2) est surinjectée d'une matière plastique isolante (25) et la broche (24) surinjectée de matière plastique (25) sert de détrompeur lors de l'engagement du dispositif d'allumage dans un connecteur.
